# EUROPEAN PATENT SPECIFICATION

(11) **EP 3 507 563 B1**
(45) Date of publication and mention of the grant of the patent: **08.10.2025**
(21) Application number: 17865902.5
(22) Date of filing: 31.08.2017
(51) Int. Cl.: F41A 23/10, F41C 27/00, F41C 23/12

(54) **AN EXTENSION FOR A GUN SUPPORT**
VERLÄNGERUNG FÜR EINEN FEUERWAFFENSTÜTZE
EXTENSION POUR UN SUPPORT D'ARME À FEU

(30) Priority: 01.09.2016 US 201662382568 P
(43) Date of publication of application: 10.07.2019
(73) Proprietor: Accuracy Solutions, LLC, Santa Ana, CA 92703 (US)
(72) Inventor: GYUREC, Ernesto Daniel, Santa Ana, CA 92703 (US)
(74) Representative: Arnold & Siedsma
(86) International application number: PCT/US2017/049754
(87) International publication number: WO 2018/080636

(56) References cited:
- EP-A2- 2 455 698
- RU-U1- 54 663
- US-A- 5 345 706
- US-A1- 2008 295 379
- US-A1- 2009 126 250
- US-A1- 2011 126 444
- US-A1- 2011 214 330
- US-A1- 2015 075 054
- US-A1- 2015 121 741
- US-B1- 8 443 538
- US-B1- 8 458 946
- US-B1- 9 021 728

## Description

### Background

### Field of the Technology

The invention relates to the field of mountings of firearms including locking means between gun and mounting, mountings without wheels (conventional mono-, bi- or tripods, test mounts and bench rests).

### Description of the Prior Art

Bipod supports have long been used to support the forward end or muzzle of a rifle or machine gun during the firing thereof in an effort to "steady" or "stabilize" the weapon to increase the shooter's accuracy. The bipod supports are also useful to support the muzzle of the rifle above the ground or other supporting surface during periods when the rifle is not being fired or is being cleaned. If the bipod is coupled at or near the muzzle of the gun, the harmonics of the gun barrel during the firing, which are highly relevant to accuracy of sighting and aiming, are materially affected by the bipod. If the bipod is mounted further back on the gun stock, the harmonics of the barrel during firing is not affected, but the lever arm between the point of bipod attachment to the stock and the muzzle leads to a mechanically amplified displacement of the barrel orientation of any unintended movement during sighting, or triggering, materially affecting the accuracy of the aiming. Accuracy of sighting and firing depends not only on the angular orientation in space of the gun barrel, but also on the stability of the gun muzzle position in space.

What is needed is some kind of accessory that can be used with bipod or tripod gun supports or rests that do not interfere with barrel harmonics during firing, but are also not subject to mechanically amplified barrel misalignments or aiming errors.

US2011/0126444A1 in accordance with its abstract relates to ' A method for mounting a bipod support to a forearm stock of a firearm or other bipod mounted device permits a user or shooter to selectively allow panning (or altering the aim point along an azimuth), tilting (or altering the orientation of a device relative to a horizontal line) and canting (or orienting a device at a selected rotational orientation relative to an axis of rotation). The bipod support includes lockable controls for selectively limiting panning, tilting and canting in a manner which lets the shooter or user easily respond to changing situations when in the field."

US5345706A in accordance with its abstract states ' A firearm support is provided with a receiving and attachment means for receiving the firearm and securely holding it. The attachment means engages with the sling mount bolt of a firearm and draws the firearm and firearm support tightly but releasably together. The attachment means includes gripping arms with pins that engage a sling bore in the sling mount bolt. The attachment means also includes a fixed body or neck with an inner bore that receives the sling mount bolt and gripping arms. The inner bore has an elongate camming surface to engage an outer surface on the gripping arms for urging the pins into the sling bore and holding them in place as the gripping arms and sling mount bolt are pulled into the inner bore. The firearm support includes a telescoping leg that has an internal lock to maintain the leg in a closed or carrying position with respect to the firearm. Adjustment means are provided to position the telescoping leg substantially parallel to the barrel of the firearm when in the folded carrying position.'

The abstract of US8443538B1 states: ' Devices, apparatus, systems and methods of using a rear pistol handle on a rifle with a rapidly extendable and height adjustable monopod for enhancing stability and shot accuracy, where the monopod is retracted and concealed inside the rear grip handle when not used, and supports and stabilizes the firearm when the monopod is extended. A spring biased button can be depressed to allow for springs on top of retracted telescoping cylinders to spread apart and extend out from beneath a grip handle on the rifle. The invention can be used to create a triangulation configuration effect when used with a forward bipod, such as a forward grip bipod.'

### Brief Summary

The illustrated embodiments of the invention include an extension system for a gun support according to claim 1, attachable to a gun. The gun has a muzzle. The extension system includes a telescopic assembly having a proximal end and a distal end. The proximal end is coupled to the gun, and the distal end is coupled to the gun support, typically a bipod. However, a gun support is not necessary; the distal end of the invention can function as the extended resting point of the gun, in which case the object against or on which the distal end is resting is treated as the gun support. The telescopic assembly includes at least two telescopic portions nested within each other. At least one clamp engages the telescopic portions to selectively fix the two telescopic portions relative to each other to provide an adjustable length of the telescopic assembly, which is then capable of positioning the gun support in proximity to or even past the muzzle.

The extension system in another embodiment may include three or more telescopic portions nested within each other and two or more clamps for fixing the telescopic portions relative to one another.

The clamp is a toggle clamp.

The telescopic portions are tubular in shape. The telescopic portions are preferably carbon fiber tubes.

The gun stock has a distal portion and the proximal end of the telescopic assembly is coupled to that distal end portion. The telescopic assembly thereby forms a parallel structure to the gun that, among other effects, dampens the recoil effect of the gun, which is a downward and/or backward force applied to the gun barrel during firing, which can interfere with sighting or aiming accuracy.

The proximal end of the telescopic assembly is comprised of a proximal tube coupled to the gun. The telescopic assembly further includes at least one extension tube nested and freely rotatable within the proximal tube. The telescopic assembly further includes a releasable clamp for selectively fixing the at least one extension tube within the proximal tube. The relative angular orientation of the proximal tube and extension tube being rotationally adjustable with respect to each other so that canting of the gun and adjustability of sighting of the canted gun is allowed.

The illustrated embodiments also include a method of sighting and/or firing a gun using the extension system of any one of the above embodiments.

### Brief Description of the Drawings

The patent or application file contains at least one drawing executed in color. Copies of this patent or patent application publication with color drawing(s) will be provided by the Office upon request and payment of the necessary fee.
Fig. 1 is a side elevational view of a rifle with a bipod support extension system attached to the stock's distal end of the gun using the extension of the illustrated embodiments shown in a contracted or shortened configuration.
Fig. 2 is a perspective front view of a rifle with a bipod support extension system attached to the stock of the gun using the extension of the illustrated embodiments shown in an extended configuration.
Fig. 3 is a side elevational view of the extension system of the illustrated embodiments shown in a partially contracted configuration in isolation of connection to the bipod support or gun stock.
Fig. 4 is a side elevational view of the extension system of the illustrated embodiments shown in the fully-extended configuration in isolation of connection to the bipod support or gun stock.
Fig. 5 is a side elevational view of the extension system of the illustrated embodiments shown in the contracted configuration connected to a bipod gun mount in its folded configuration in isolation from the gun.
Fig. 6 is a side elevational view of the proximal end portion of the extension system of the illustrated embodiments shown in enlarged view depicting the rear sliding toggle lock and the two mounting rings for attachment to the gun stock.
Fig. 7 is a side elevational view of the proximal end portion of the extension system of the illustrated embodiments shown in enlarged view depicting one of the mounting rings detached from the proximal portion of the extension tube and rotated for a better plan view.
Fig. 8 is an end perspective view of the proximal end portion of the extension system of the illustrated embodiments shown in enlarged view depicting an end plug for closing the proximal end portion.
Fig. 9 is a bottom elevational view of the distal end portion of the extension system of the illustrated embodiments shown in enlarged view depicting the threaded mounting holes and a sling stud mounting pin shown as detached by which the "sling stud" type bipod supports, such as the widely recognized Harris type of bipods, will be coupled to the extension system.
Fig.10 is a partial bottom elevational view of the distal end portion of the extension system of the illustrated embodiments shown in enlarged view depicting the installed mounting pin and a Picatinny rail bipod supporting block shown as detached in perspective view.
Fig.11 is a partial bottom elevational view of the distal end portion of the extension system of the illustrated embodiments shown in enlarged view depicting the installed bipod supporting block. In this case the sling stud pin was removed and a Picatinny rail was instead mounted to the embodiment to allow for the attachment to a Picatinny-styled bipod or tripod.
Fig.12 is a partial bottom elevational view of the distal end portion of the extension system of the illustrated embodiments shown in enlarged view depicting the installed bipod supporting block with the mating mounting fixture of the bipod support shown as detached.
Fig.13 is a side elevational view of the distal end portion of the extension system of the illustrated embodiments shown in enlarged view depicting the installed bipod support.
Fig. 14 is a side elevational view of a rifle with the extension system of the illustrated embodiments attached to the stock's distal end shown in an extended configuration placing the bipod support beyond or well in front of the muzzle of the gun.
Fig. 15 is a front perspective view of a rifle with the extension system of the illustrated embodiments attached to the stock's distal end shown in a canted configuration where the bipod support rests on an uneven surface yet the rifle is azimuthally oriented perpendicular to the ground.
Fig. 16 is a side plan view of an embodiment of the extension system shown in isolation from the gun with a folding forward grip and a short distal Picatinny rail.
Fig, 17 is a side plan view of an embodiment of Fig. 16 shown in a collapsed configuration.
Fig. 18 is a side plan view of an embodiment of Fig. 16 shown in an extended configuration.
Fig. 19 is a side plan view of an embodiment of Fig. 16 in exploded view being assembled to a gun using a tilted Picatinny rail and a bipod.
Fig. 20a is a perspective view of the quick detach lever in an unlocked configuration.
Fig. 20b is a perspective view of the quick detach lever in a locked configuration.
Fig. 21 is a side plan view of a bubble level attachable to the extension system.
Fig. 22 is a rear perspective view of the bubble level of Fig. 21 shown attached to the extension system when assembled with the gun as would be seen by the shooter when aiming the gun.
Fig. 23 is a perspective view of an embodiment of the extension system where two differently sized bipods are attached to the distal end of the extension system with the upper bipod in a folded or collapsed configuration and the lower bipod extended.
Fig. 24 is perspective view of the embodiment of Fig. 23 with the two bipods rotated by rotation of the distal end of the extension system to reverse the positions of the bipods, the upper bipod of Fig. 23 now shown as lowermost and extended and the lower bipod of Fig. 23 now shown as uppermost and folded into a collapsed configuration.
Fig. 25 is a side plan elevational view of the tilted Picatinny rail attached to the stock of a gun.
Fig. 26 is an end perspective view of the extension system shown in isolation of the gun in which the distal end of the extension system is provided with a bipod support and three orthogonally positioned Picatinny rails for connection with other accessories

The disclosure and its various embodiments can now be better understood by turning to the following detailed description of the preferred embodiments which are presented as illustrated examples of the embodiments defined in the claims. It is expressly understood that the embodiments as defined by the claims may be broader than the illustrated embodiments described below.

### Detailed Description of the Preferred Embodiments

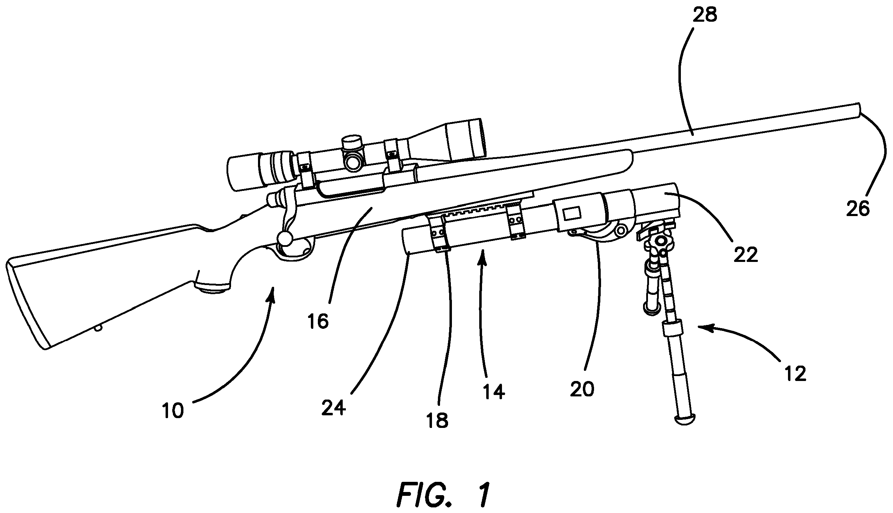

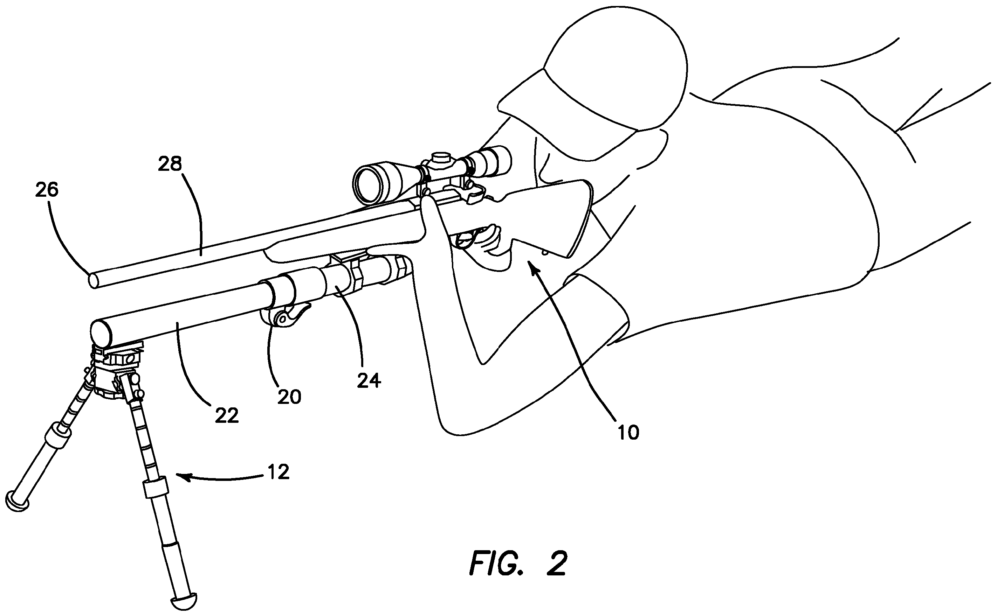

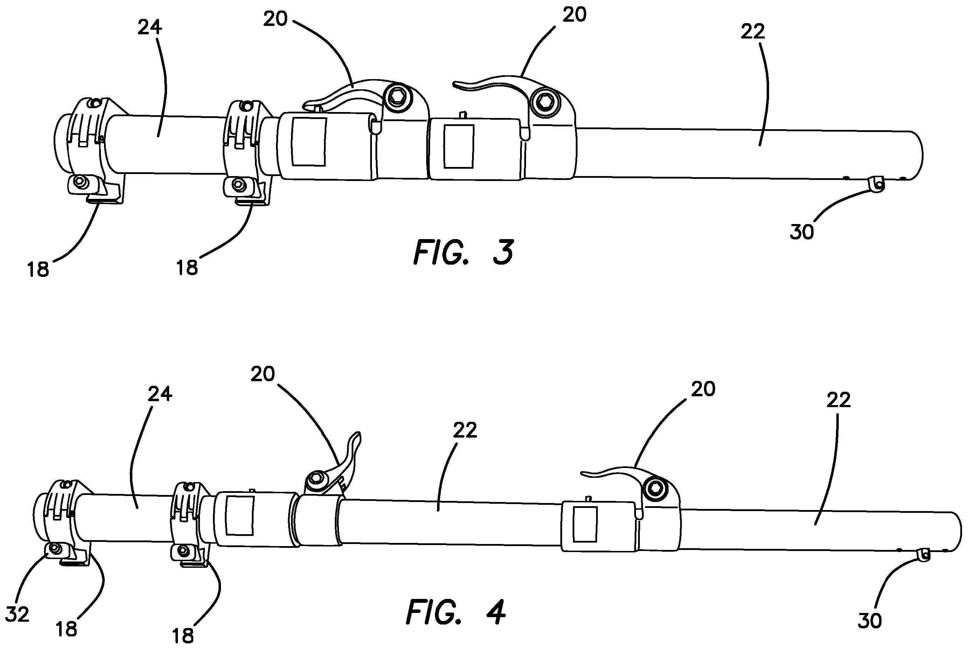

Fig. 1 is a side elevational view of a rifle 10 with a bipod support extension system 14 attached to the stock's distal end 16 of the gun 10 using the extension 14 of the illustrated embodiments shown in a contracted or shortened configuration. Any type of gun, whether air-powered, fire arm or weapon may be used with extension system 14 and the telescopically equipped bolt action rifle of the illustrated embodiment is shown only as an example. Adjustable bipod support 12 is also conventional and any bipod, tripod, monopod or other type of support may be substituted without departing from the spirit and scope of the invention. The depiction of Fig. 1 show extension system 14 as including gun mounting rings 18 coupled to the proximal end portion and a toggle clamp 20 selectively coupled to extension tube 22 forming the distal portion of extension system 14 to which bipod support 12 is coupled. The embodiment of Figs. 1 and 2 include a single telescopic extension tube 22 and hence a single toggle clamp 20, but the embodiment of Figs. 3 - 5 include two telescopic extensions tubes 22 and two corresponding toggle clamps 20 as described in greater detail below. Any number of telescopically nested extension tubes 22 may be employed, but in the illustrated embodiments one or two such tubes 22 accommodate nearly all commonly used rifles.

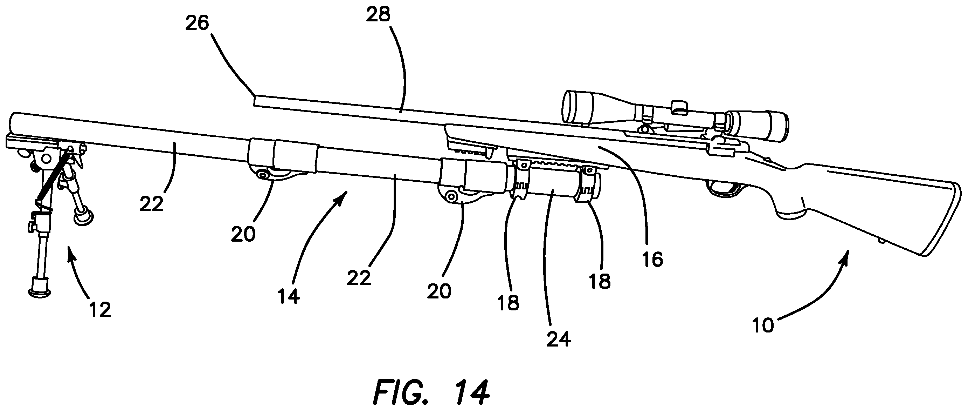

Fig. 1 shows extension tube 22 fully nested within proximal end portion 24 putting extension system 14 in its contracted configuration and Fig. 2 shows extension tube 22 extended from proximal end portion 24 to put extension system 14 in its extended configuration, where bipod support 12 is aligned or approximately aligned with the muzzle 26 of gun 10. Fig. 14 is a side elevational view of a rifle 10 with a bipod support extension system 14 of the illustrated embodiments attached to the stock's distal end 16 in an extended configuration placing the bipod support 12 beyond or well in front of the muzzle 26 of the gun 10.

It can now be appreciated by from Figs. 1 and 2 that attachment of extension system 14 to the stock's distal end 16 of gun 10 leaves barrel 28 of gun 10 unimpeded by any fitting or connection to extension system 14 and hence bipod support 12. The harmonics of barrel 28 as it is fired, and hence its firing accuracy, are thus left free of any added restraints or effects that might be created by result of connection to a bipod support. On the other hand, the position of muzzle 26 is stabilized and defined by the proximate position of bipod support 12 allowed by extension system 14. The adjustability of extension system 14 thus allows fitting of system 14 to many different guns 10 having different barrel lengths and physical configurations. Any movement of gun 10 from any cause during sighting or triggering is not mechanically amplified to the relative position of muzzle 26 by a lever arm between the pivot position of bipod support 12 because the distance or lever arm between muzzle 26 and bipod support 12 is set at or close to zero by use of extension system 14.

Fig. 3 is a side elevational view of the extension system 14 of the illustrated embodiments shown in the partially contracted configuration in isolation of connection to the bipod support 12 or gun stock's distal end 16. In the embodiment of Figs. 3 - 5 there are two telescopically nested extension tubes 22 nested within each other and within proximal end portion 24, although only one of these tubes 22 is observable in the depiction of Fig. 3. Extension tubes 22 are selectively locked into position using conventional toggle clamps 20. In Fig. 3 one toggle clamp 20 is fixed to end portion 24 and the second toggle clamp 20 is fixed to the distal end of the first extension tube 22. Fig. 4 is a side elevational view of the extension system 14 of the illustrated embodiments shown in the fully-extended configuration in isolation of connection to the bipod support 12 or gun stock 16. Fig. 4 shows the first toggle clamp 20 on the left in the figure unlocked allowing first extension tube 22 on the left to extend from proximal end portion 24. The second toggle clamp 20 on the right in the figure is in the locked position holding the second and distal-most extension tube 22 in the right of the figure in extended position.

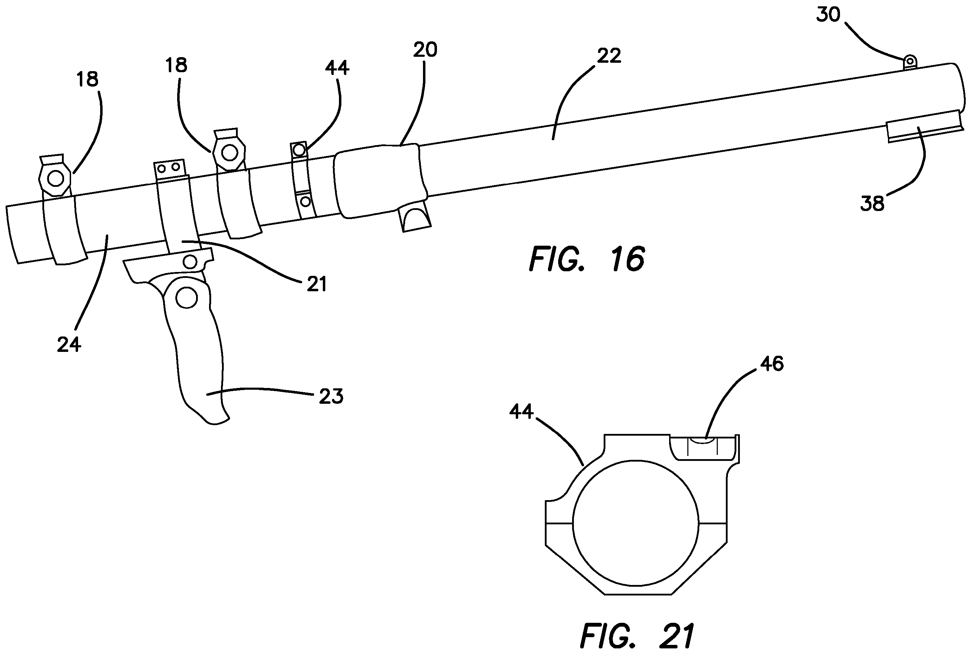

Fig. 16 is a side plan view of a second embodiment of the extension system 14 shown in isolation from the gun 10 with a folding forward grip 23 attached to proximal end portion or base tube 24 of extension system 14 by means of a floating ring 21 and with a short distal Picatinny rail 38. The embodiment of Fig. 16 includes a single toggle clamp 20 and extension tube 22.

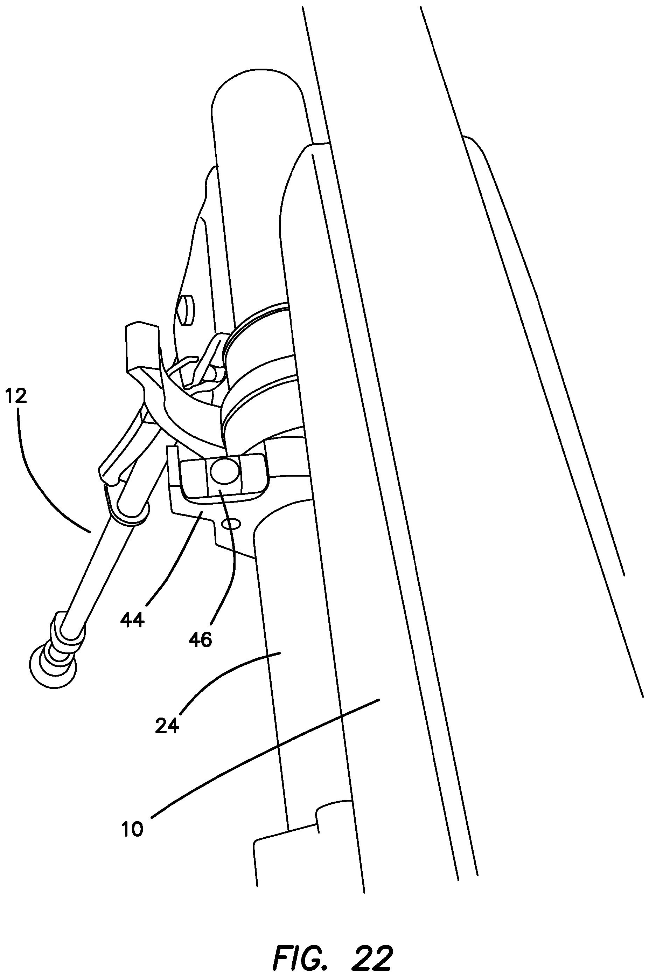

A bubble level 44 is also attached to base tube 24 as better illustrated in the side plan view of Fig. 21. Bubble level 44 has a bubble level tube 46 by which the azimuthal orientation of extension system 14 and hence gun 10 can be determined as best illustrated in Fig. 22. When locking clamp 20 is in an open position extension tube 22 can rotate 360° to achieve any desired canting correction. Bubble level 44 is employed to level gun 10 at whatever cant bipod 12 or other support might apply to gun 10.

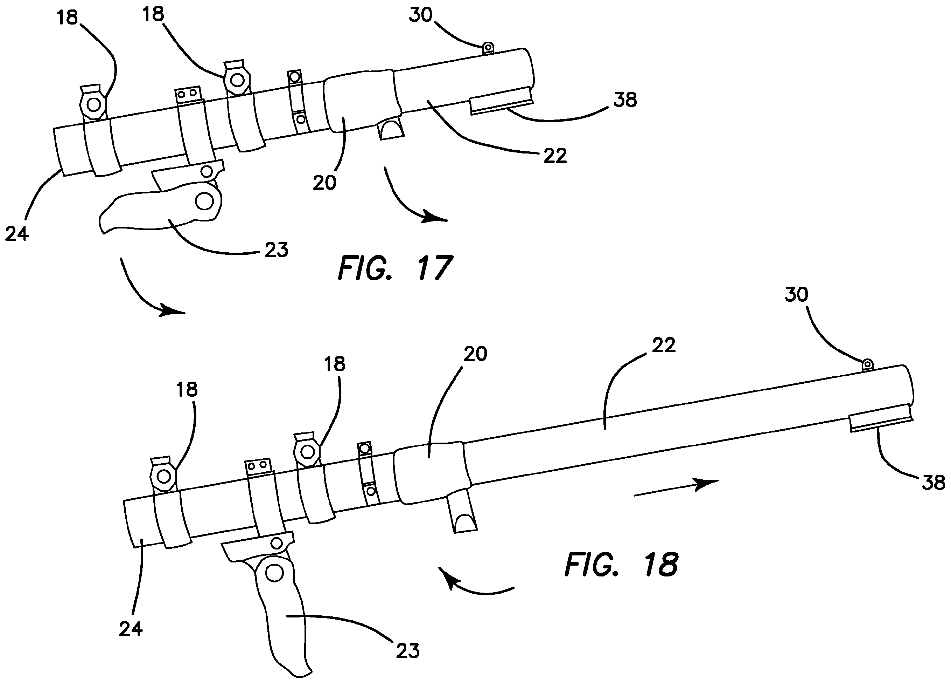

Fig, 17 is a side plan view of an embodiment of Fig. 16 shown in a collapsed configuration and Fig. 18 is a side plan view of an embodiment of Fig. 16 shown in an extended configuration with folding grip 23 extended in an operative position. To adjust the length of extension system 14 locking clamp 20 is pulled into its open configuration. This releases the telescopic feature of extension system 14 and allows the resting point of extension system 14 to be selectively chosen by the user. In the preferred embodiment, the resting point being at or near the effective muzzle exit of gun 10 to minimize the lever arm which is applied to the effective muzzle exit by any movement of the gun by the user or by the gun's operation. The locking clamps 20 are returned to the closed and locked position when tubes 22 are extended to the desired length. The accurate aiming and firing of a gun is a complex phenomenon dependent on multiple input variables which are not perfectly understood and which continue to be debated among experts. In addition to the well known factors of distance to the target and windage, the angular orientation of the gun and effective location of the gun muzzle affect accuracy in aiming. The angular orientation of the gun relative to gravity, the harmonic motion of the barrel caused by firing, the dynamic interaction of the interior of the barrel with the projectile, the effect of the explosive charge, the nature of the rifling, the nature of the support of the gun, the motion of the shooter on firing, the motion of the firing mechanism, sight alignment, sight picture, scope optics, and other factors may contribute to a determination of an effective muzzle position of the gun, which may be at or close to the physical muzzle location.

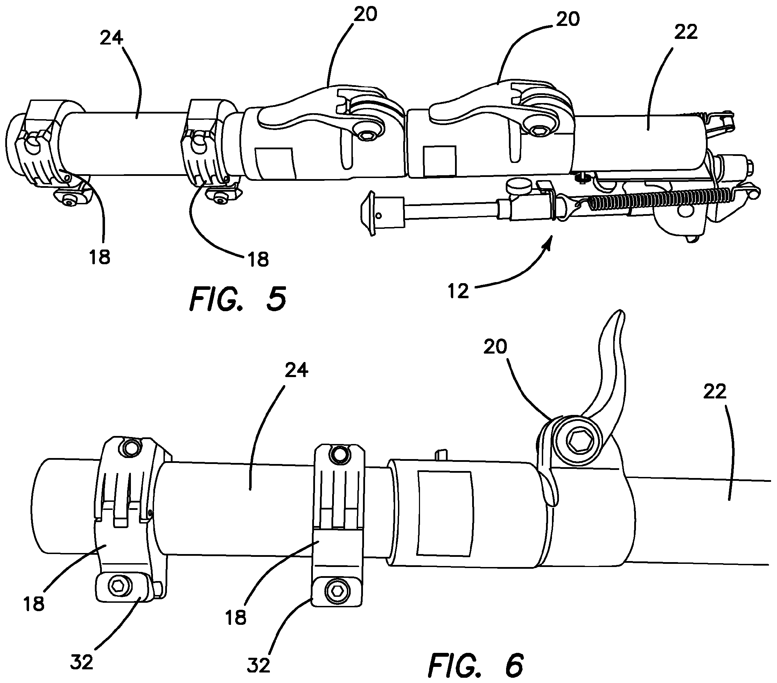

Fig. 5 is a side elevational view of the extension system 14 of the illustrated embodiments shown in the contracted configuration connected to a bipod gun mount 12 in its folded configuration in isolation from the gun 10. Bipod support 12 in the illustrated embodiment has spring-loaded adjustable length legs, but any bipod design desired may be employed.

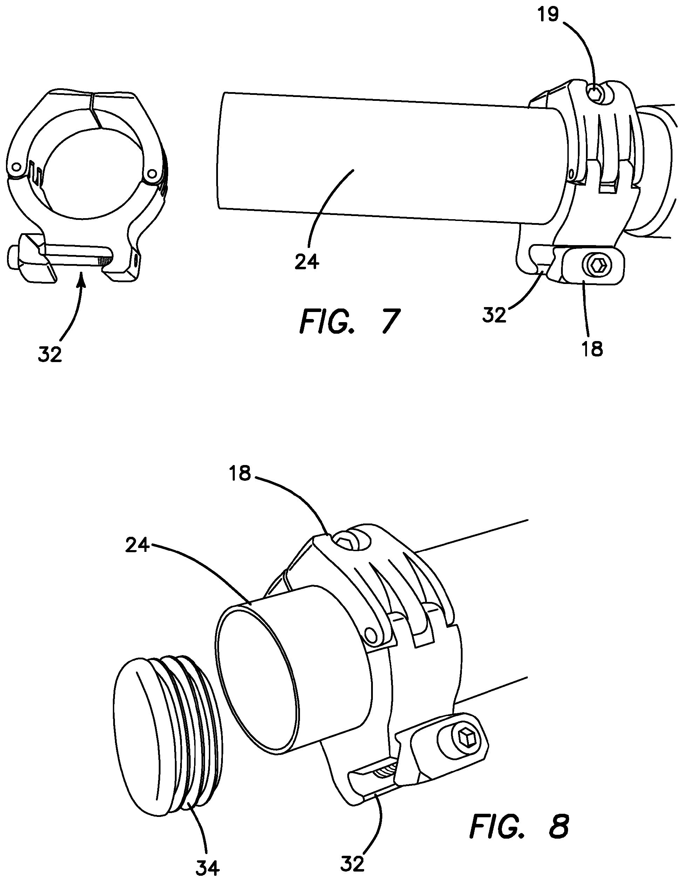

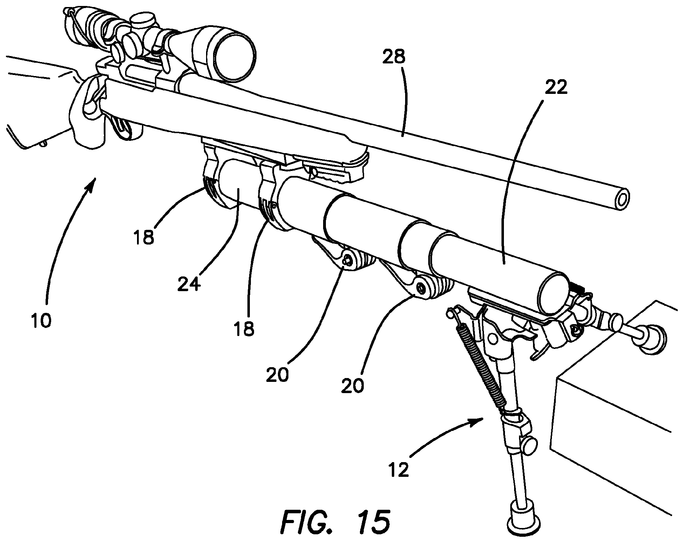

In the illustrated embodiment end portion 24 and extension tubes 22 are comprised of thick walled carbon fiber tubing, but any strong, rigid material may be equivalently employed. A pair of mounting rings 18 are clamped onto end portion 24 and include a conventional gun fitting 32 best seen in Fig. 7 on their upper portions, such as a Picatinny rail as shown in Fig. 1 attached to the gun stock 16. "Picatinny rail" is a commonly used name for both the U.S. Military Standard 1913 and the recently NATO-approved version of it, the STANAG 4694 NATO Accessory Rail. Locking is accomplished by tightening fitting bolts. Fig. 6 is a side elevational view of the proximal end portion 24 of the extension system 14 of the illustrated embodiments shown in enlarged view depicting the rear sliding toggle clamp 20 and the two mounting rings 18 for attachment to the gun stock. The levers of toggle clamp 20 of the illustrated embodiment operate front to back, but can be replaced by toggle clamps with levers that operate from side to side. Fig. 7 is a side elevational view of the proximal end portion 24 of the extension system 14 of the illustrated embodiments shown in enlarged view depicting one of the mounting rings 18 detached from the proximal portion 24 and rotated for a better plan view of the conventional gun fitting 32. Note that ring 18 can be positioned on proximal end portion in any desired angular orientation. Its relative angular orientation, once selected, is then fixed by tightening bolt 19 best seen in Fig. 7. Similarly, once an angular orientation is selected, it can be changed by loosening bolts 19 on rings 18, rotating proximal portion 24 within rings 18 and then fixing the new angular orientation by retightening bolts 19. Thus, when gun 10 is canted to the side, when for example, bipod support 12 is placed on a canted surface as shown in Fig. 15 or if the legs of bipod support 12 are unevenly adjusted for any purpose, the canted angular position of gun 10 can be corrected or adjusted. The canting, also known by shooting enthusiasts as "swiveling", is adjusted by rotating the nested tubes 22. This is also much easier to accomplish than loosening and re-tightening mounting rings 18. Under normal conditions the gun operator will affix and tighten the proximal end portion 24 of the extension system 14 to the stock's distal end 16 with mounting rings 18 only once. Any further desired adjustments, including canting, can be accomplished by simply loosening toggle clamps 20, making the adjustments by rotating extension tubes 22 with respect to each other and retightening clamps 20. This is possible because the nested tubes 22, besides extending and collapsing, also rotate in either direction relative to one another by any degree from 0 to 360° or more. This allows for "extreme canting".

Fig. 8 is an end perspective view of the proximal end portion 24 of the extension system 14 of the illustrated embodiments shown in enlarged view depicting an end plug 34 for closing the proximal end portion 24. End plug 34 is compression fitted into the proximal end of end portion 24, but threaded or pinned plugs could also be utilized.

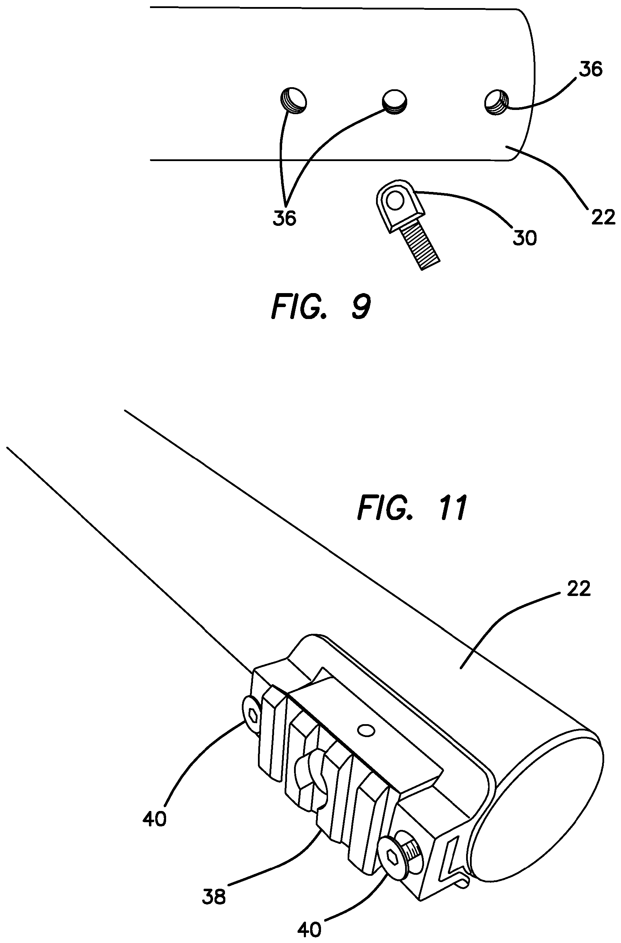

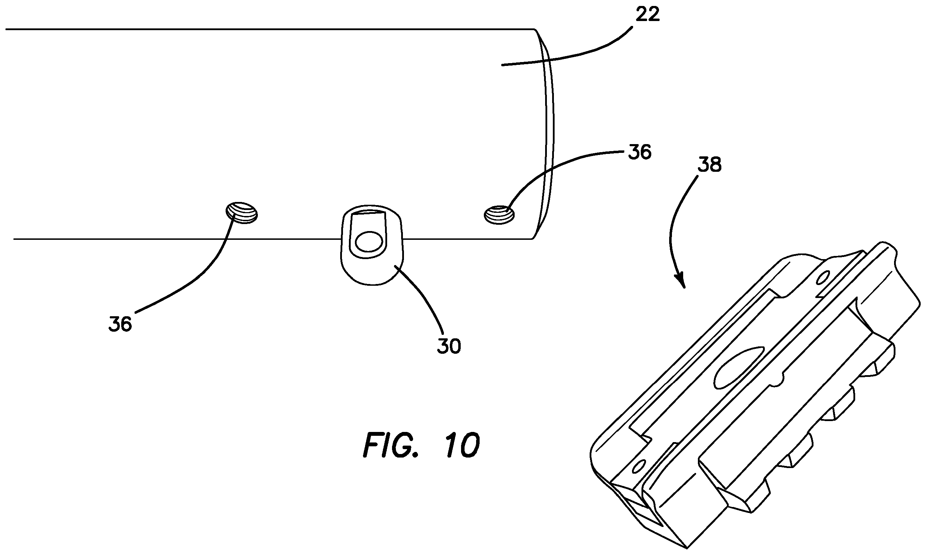

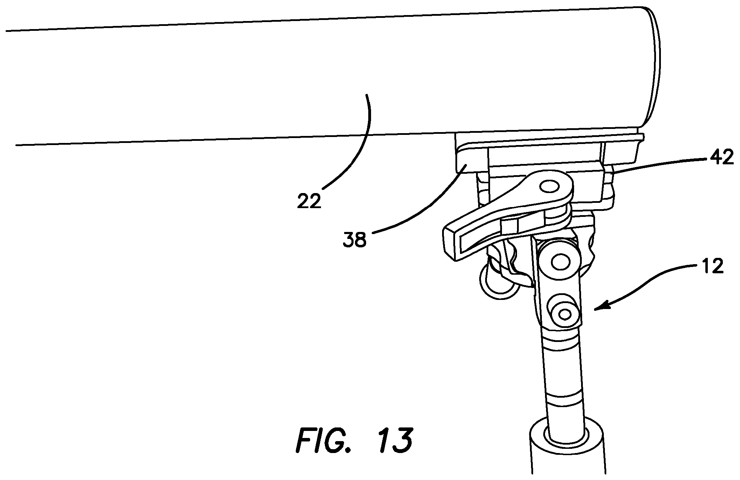

Fig. 9 is a bottom elevational view of the distal end of extension tube 22 of the extension system 14 of the illustrated embodiments shown in enlarged view depicting the threaded mounting holes 36 and mounting pin 30 shown as detached by which different versions of the bipod support 12 will be coupled to the extension system 14. Fig.9 shows three threaded holes on one side of the tube 22. In other embodiments the hole closest to the edge may be eliminated, so that only two holes along the length of the tube 22 are provided, repeated four times for a total of 8 holes, grouped in pairs, with each group 90° from the next group. This arrangement allows for a variety of attachments to be mounted simultaneously. Fig.10 is a partial bottom elevational view of the distal end of extension tube 22 of the extension system 14 of the illustrated embodiments shown in enlarged view depicting the installed sling stud mounting pin 30. A more modern alternative mounting method to the sling stud mounting pin 30 is the Picatinny rail bipod support 38 shown as detached in perspective view. Mounting pin 30 is installed in the middle of the three threaded holes 36 in extension tube 22 and a sling stud mounting type of bipod can be attached to it, as shown in Figure 5. Alternatively, the sling stud mounting pin 30 can be removed to allow for the attachment of a Picatinny rail 38 to which a Picatinny rail type of bipod could attach, as shown in Fig. 13. Bipod support Picatinny rail 38 attaches to tube 22 by two through-bolts 40 threaded into the end holes 36 as best depicted in Fig. 11. Fig.11 is a partial bottom elevational view of the distal end of tube 22 of the extension system 14 of the illustrated embodiments shown in enlarged view depicting the installed Picatinny rail bipod support 38. In another embodiment Picatinny rail 38 and sling stud mounting pin 30 are both included, each one on an opposing side of the distal end of extension tube 22.

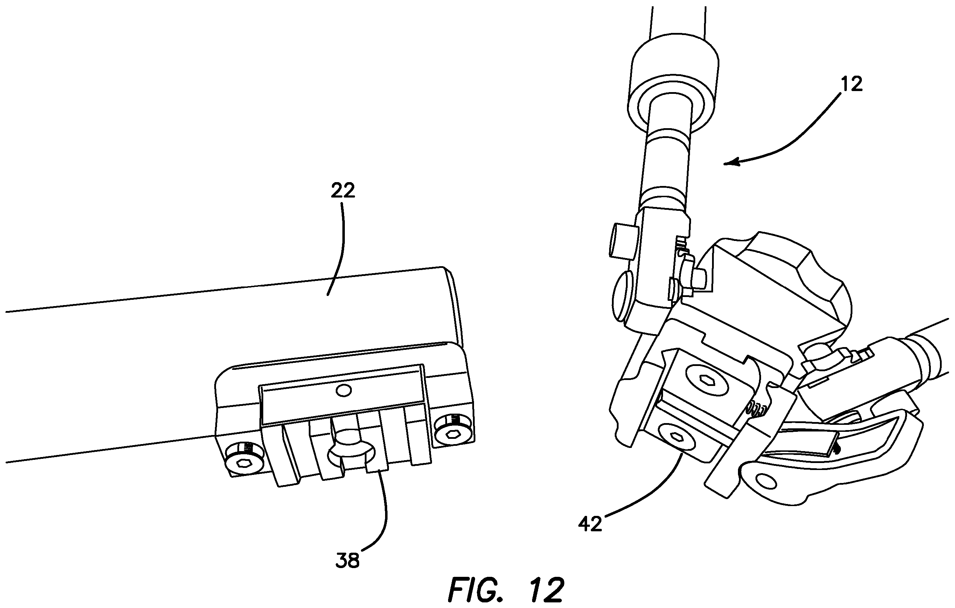

Fig.12 is a partial bottom elevational view of the distal end portion of the extension system 14 with Picatinny rail 38 of the illustrated embodiments shown in enlarged view depicting the installed bipod support Picatinny rail 38 with the mating mounting fixture 42 of the bipod support 12 shown as detached. Fig.13 is a side elevational view of the distal end portion of the extension system 14 of the illustrated embodiments shown in enlarged view depicting the installed bipod support 12 coupled to bipod support Picatinny rail 38.

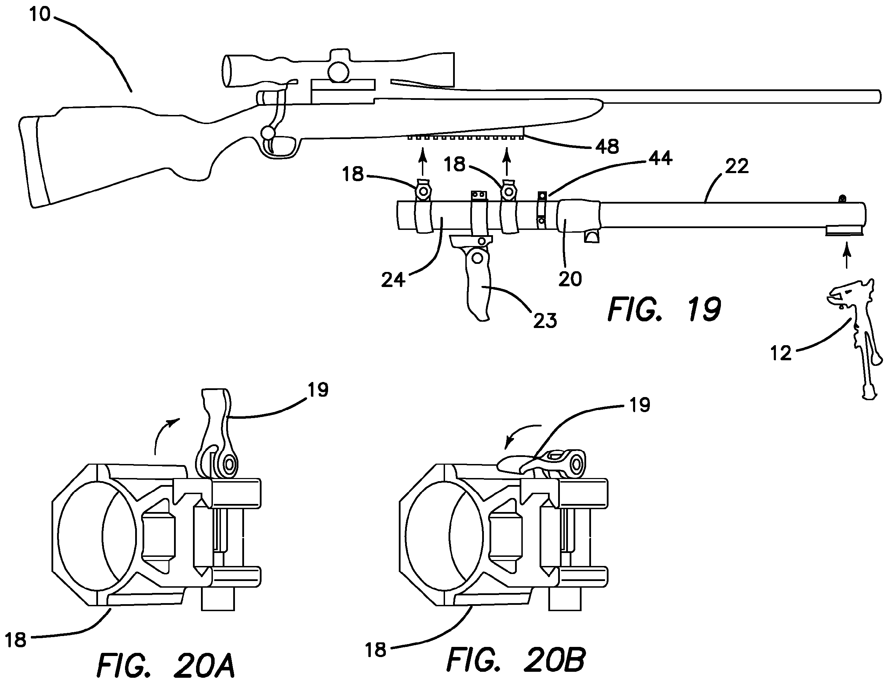

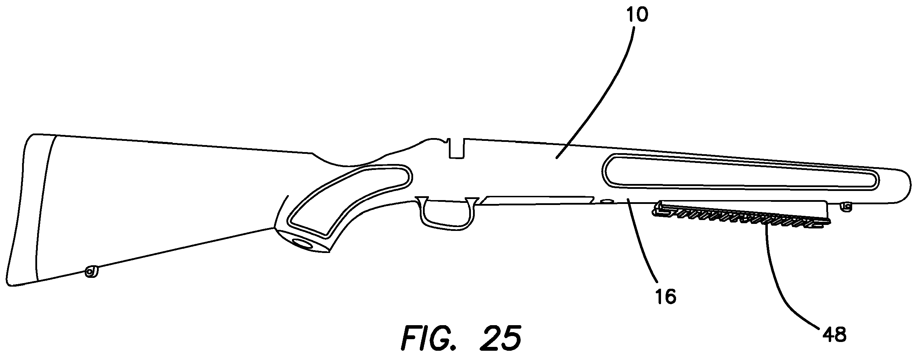

Fig. 19 is a side plan view of the embodiment of Fig. 16 in exploded view being assembled to a gun 10 using a tilted Picatinny rail 48 and a bipod 12. Fig. 20a is a perspective view of the quick detach mounting ring 18 in an unlocked configuration where toggle lever 19 is rotated to an open configuration releasing mounting ring 18 from tilted Picatinny rail 48. Fig. 20b is a perspective view of the quick detach mounting ring 18 in a locked configuration where toggle lever 19 is rotated to a closed configuration locking mounting ring 18 to tilted Picatinny rail 48. The attachment of Picatinny rail 48 to the gun stock 16 is better illustrated in the side plan elevational view of Fig. 25.

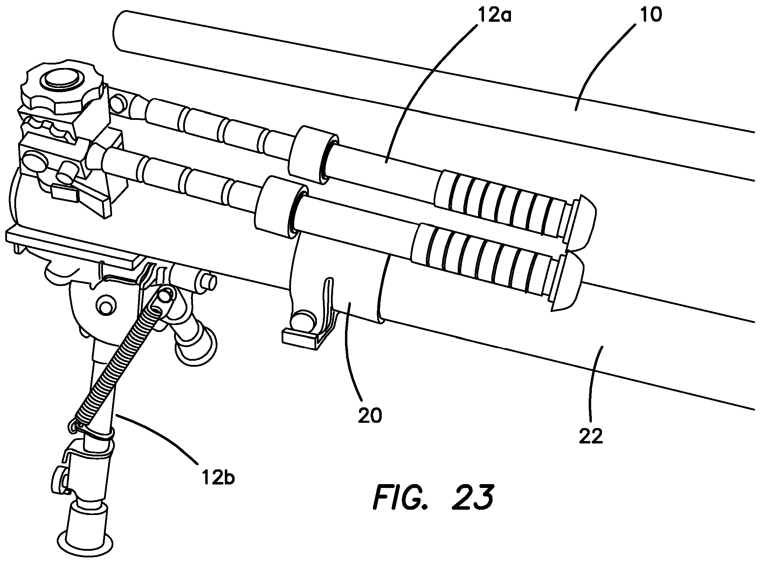

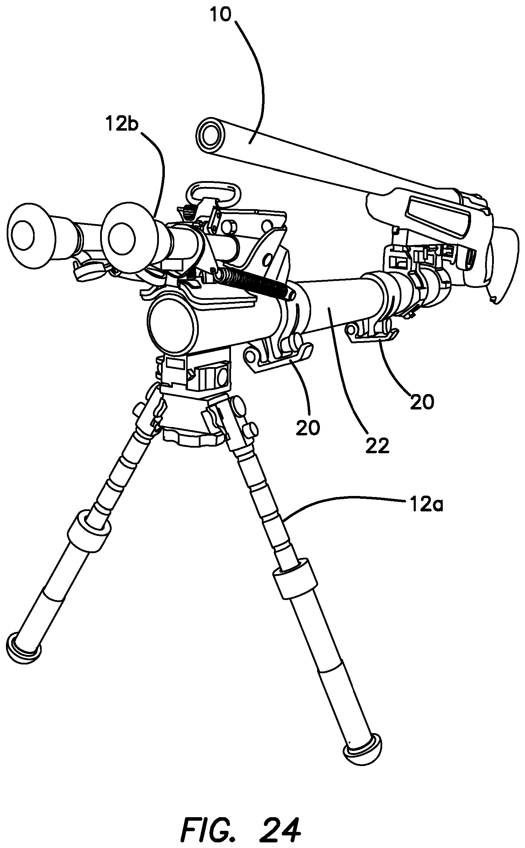

Figs. 23 and 24 illustrate another embodiment where two bipods 12a and 12b are fixed to the distal end of extension system 14. Fig. 23 is perspective view of an embodiment of the extension system 14 where two differently sized bipods 12a and 12b are attached to the distal end of the extension system 14 with the upper bipod 12a in a folded or collapsed configuration and the lower bipod 12b extended. Fig. 24 is perspective view of the embodiment of Fig. 23 with the two bipods 12a and 12b rotated by a 180° rotation of the distal end of the extension system 14 to reverse the positions of the bipods 12a and 12b, the upper bipod 12a of Fig. 23 now shown as lowermost and extended and the lower bipod 12b of Fig. 23 now shown as uppermost and folded into a collapsed configuration.

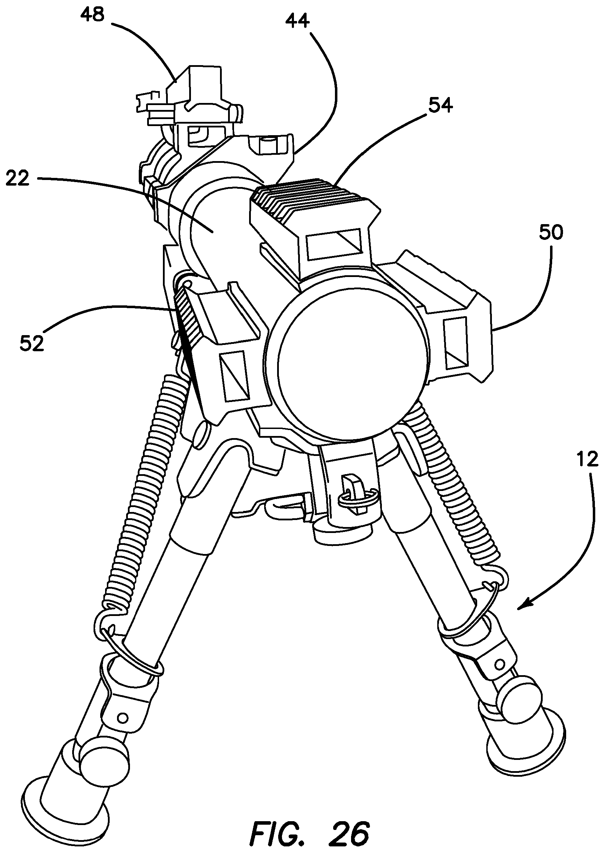

Fig. 26 is an end perspective view of the extension system 14 shown in isolation of the gun 10 in which the distal end of the extension system 14 is provided with a bipod support 12 coupled to the sling stud mounting pin 30 and provided with three orthogonally positioned Picatinny rails 50, 52, and 54 for connection with other accessories, such as different bipods 12, a flash light, a laser pointer (not shown) or any other gun accessories. Picatinny rail 54 is mounted to the distal end of extension system 14 opposite bipod 12 with Picatinny rails 50 and 52 mounted at 90° to the left and to the right of Picatinny rail 54. Other angular orientations could be selected if desired or fewer or more mountings provided than the four illustrated in Fig. 26.

## Claims

1. An extension system (14) for a gun support (12) attachable to a gun (10), the gun (10) having an effective muzzle (26), the extension system (14) comprising:
a telescopic assembly having a proximal end (24) and a distal end, the proximal end (24) couplable to the gun (10), the distal end couplable to the gun support (12), where the telescopic assembly includes a first telescopic portion (22) and a second telescopic portion (22), where the second telescopic portion (22) is nested within the first telescopic portion (22) and where both the first and second telescopic portions (22) are nested within the proximal end (24) when the extension system (14) is in a contracted configuration; and
at least one clamp (20) engaging the two coupled telescopic portions (22) to selectively fix the two telescopic portions (22) relative to each other to provide an adjustable length of the telescopic assembly, the extension system (14) which is then capable of positioning the gun support (12) at or in the proximity of the effective muzzle (26).

2. The extension system (14) of claim 1, further comprising third telescopic portion (22) and two clamps (20) for fixing the three telescopic portions (22) relative to one another.

3. The extension system (14) of claim 1, where the clamp (20) is a toggle clamp.

4. The extension system (14) of claim 2, where the two clamps (20) are each a toggle clamp.

5. The extension system (14) of any of the preceding claims, where the telescopic portions (22) are cylindrical, and/or where the telescopic portions (22) are hollow carbon fiber tubes.

6. The extension system (14) of claim 1, where the gun (10), to which the assembly (14) is attachable, has a barrel (28) and a stock distal end (16) and where the proximal end (24) of the telescopic assembly (14) is couplable to the stock's distal end (16) of the gun (10) in parallel with the barrel (28) of the gun (10), the telescopic assembly forming a parallel structure to the gun (10) to dampen recoil effect of the gun.

7. The extension system (14) of claim 1, where the proximal end (24) of the telescopic assembly is comprised of a proximal tube couplable to the gun (10), at least one extension tube nested with and freely rotatable relative to the proximal tube, and a releasable clamp for selectively fixing the at least one extension tube with the proximal tube, the relative angular orientation of the proximal tube and extension tube being rotationally adjustable with respect to each other so that canting of the gun and adjustability of sighting of the canted gun is allowed when the assembly is attached to the gun, preferably further comprising a bubble level (24) adjustably coupled to the extension system (14) to provide an indication of azimuthal alignment of the gun (10).

8. The extension system (14) of claim 1, further comprising attachment fittings for two gun supports to the distal end of the telescopic assembly (14), the distal end of the telescopic assembly (14) being selectively rotatable relative to the gun (10) to selectively position one of the two gun supports in an operative configuration, preferably where the two gun supports are attached on opposite sides of the distal end of the telescopic assembly (14) to allow positioning of either one of the two gun supports in an operative configuration by an approximate 180° rotation of the distal end of the telescopic assembly.

9. An assembly comprising an extension system (14) according to any of the preceding claims 1-8 and a gun (10) to which the extension system is attached.

10. The assembly of claim 9, where coupling of the assembly to the gun (10) is **characterized by** a predetermined degree of flexibility so that recoil of the gun (10) and resulting movement of the effective muzzle (26) of the gun (120) when fired is at least partially absorbed by the assembly.

## Patentansprüche

1. Verlängerungssystem (14) für eine Waffenhalterung (12), die an einer Waffe (10) befestigt werden kann, wobei die Waffe (10) eine wirksame Mündung (26) aufweist, das Verlängerungssystem (14) umfassend:
eine Teleskopanordnung, die ein proximales Ende (24) und ein distales Ende aufweist, wobei das proximale Ende (24) mit der Waffe (10) gekoppelt werden kann, das distale Ende mit der Waffenhalterung (12) gekoppelt werden kann, wobei die Teleskopanordnung einen ersten Teleskopabschnitt (22) und einen zweiten Teleskopabschnitt (22) einschließt, wobei der zweite Teleskopabschnitt (22) in den ersten Teleskopabschnitt (22) eingesetzt ist und wobei sowohl der erste als auch der zweite Teleskopabschnitt (22) in das proximale Ende (24) eingesetzt sind, wenn sich das Verlängerungssystem (14) in einer eingefahrenen Konfiguration befindet; und
mindestens eine Klemme (20), die in die zwei gekoppelten Teleskopabschnitte (22) eingreift, um die zwei Teleskopabschnitte (22) relativ zueinander selektiv zu fixieren, um eine einstellbare Länge der Teleskopanordnung bereitzustellen, wobei das Verlängerungssystem (14) dann in der Lage ist, die Waffenhalterung (12) an oder in der Nähe der effektiven Mündung (26) zu positionieren.

2. Verlängerungssystem (14) nach Anspruch 1, ferner umfassend einen dritten Teleskopabschnitt (22) und zwei Klemmen (20) zum Fixieren der drei Teleskopabschnitte (22) relativ zueinander.

3. Verlängerungssystem (14) nach Anspruch 1, wobei die Klemme (20) eine Kniehebelklemme ist.

4. Verlängerungssystem (14) nach Anspruch 2, wobei die zwei Klemmen (20) jeweils eine Kniehebelklemme sind.

5. Verlängerungssystem (14) nach einem der vorstehenden Ansprüche, wobei die Teleskopabschnitte (22) zylindrisch sind und/oder wobei die Teleskopabschnitte (22) hohle Kohlefaserrohre sind.

6. Verlängerungssystem (14) nach Anspruch 1, wobei die Waffe (10), an der die Anordnung (14) befestigt werden kann, einen Lauf (28) und ein distales Schaftende (16) aufweist und wobei das proximale Ende (24) der Teleskopanordnung (14) parallel zu dem Lauf (28) der Waffe (10) mit dem distalen Schaftende (16) der Waffe (10) gekoppelt werden kann, wobei die Teleskopanordnung eine parallele Struktur zu der Waffe (10) ausbildet, um einen Rückstoßeffekt der Waffe zu dämpfen.

7. Verlängerungssystem (14) nach Anspruch 1, wobei das proximale Ende (24) der Teleskopanordnung aus einem proximalen Rohr, das mit der Waffe (10) gekoppelt werden kann, mindestens einem Verlängerungsrohr, das in das proximale Rohr eingesetzt ist und relativ zu diesem frei drehbar ist, und einer lösbaren Klemme zum selektiven Fixieren des mindestens einen Verlängerungsrohrs an dem proximalen Rohr besteht, wobei die relative Winkelausrichtung des proximalen Rohrs und des Verlängerungsrohrs zueinander drehbar anpassbar ist, sodass ein Neigen der Waffe und eine Anpassbarkeit einer Visierung der geneigten Waffe möglich ist, wenn die Anordnung an der Waffe befestigt ist, vorzugsweise ferner umfassend eine Wasserwaage (24), die mit dem Verlängerungssystem (14) einstellbar gekoppelt ist, um eine Anzeige einer azimutalen Ausrichtung der Waffe (10) bereitzustellen.

8. Verlängerungssystem (14) nach Anspruch 1, ferner umfassend Befestigungsanschlussstücke für zwei Waffenhalterungen an dem distalen Ende der Teleskopanordnung (14), wobei das distale Ende der Teleskopanordnung (14) relativ zu der Waffe (10) selektiv drehbar ist, um eine der zwei Waffenhalterungen in einer Betriebskonfiguration selektiv zu positionieren, wobei die zwei Waffenhalterungen vorzugsweise an gegenüberliegenden Seiten des distalen Endes der Teleskopanordnung (14) befestigt sind, um das Positionieren einer der zwei Waffenhalterungen in einer Betriebskonfiguration durch eine Drehung des distalen Endes der Teleskopanordnung um ungefähr 180° zu ermöglichen.

9. Anordnung, umfassend ein Verlängerungssystem (14) nach einem der vorstehend Ansprüche 1 bis 8 und eine Waffe (10), an der das Verlängerungssystem befestigt ist.

10. Anordnung nach Anspruch 9, wobei das Koppeln der Anordnung an die Waffe (10) **gekennzeichnet ist durch** einen vorbestimmten Grad an Flexibilität, sodass der Rückstoß der Waffe (10) und die daraus resultierende Bewegung der effektiven Mündung (26) der Waffe (120) beim Abfeuern mindestens teilweise durch die Anordnung absorbiert wird.

## Revendications

1. Système d'extension (14) pour un support d'arme (12) pouvant être fixé à une arme (10), l'arme (10) ayant une bouche effective (26), le système d'extension (14) comprenant :
un ensemble télescopique ayant une extrémité proximale (24) et une extrémité distale, l'extrémité proximale (24) pouvant être accouplée à l'arme (10), l'extrémité distale pouvant être accouplée au support d'arme (12), où l'ensemble télescopique comporte une première partie télescopique (22) et une deuxième partie télescopique (22), où la deuxième partie télescopique (22) est emboîtée au sein de la première partie télescopique (22) et les première et deuxième parties télescopiques (22) sont toutes deux emboîtées au sein de l'extrémité proximale (24) lorsque le système d'extension (14) est dans une configuration contractée ; et
au moins une pince (20) mettant en prise les deux parties télescopiques accouplées (22) pour fixer sélectivement les deux parties télescopiques (22) l'une par rapport à l'autre afin de fournir une longueur réglable de l'ensemble télescopique, le système d'extension (14) étant alors capable de positionner le support d'arme (12) au niveau ou à proximité de la bouche effective (26).

2. Système d'extension (14) selon la revendication 1, comprenant en outre une troisième partie télescopique (22) et deux pinces (20) permettant de fixer les trois parties télescopiques (22) les unes par rapport aux autres.

3. Système d'extension (14) selon la revendication 1, où la pince (20) est une pince à genouillère.

4. Système d'extension (14) selon la revendication 2, où les deux pinces (20) sont chacune une pince à genouillère.

5. Système d'extension (14) selon l'une quelconque des revendications précédentes, où les parties télescopiques (22) sont cylindriques, et/ou où les parties télescopiques (22) sont des tubes creux en fibre de carbone.

6. Système d'extension (14) selon la revendication 1, où l'arme (10), à laquelle l'ensemble (14) peut être fixé, a un canon (28) et une extrémité distale de crosse (16) et où l'extrémité proximale (24) de l'ensemble télescopique (14) peut être accouplée à l'extrémité distale de crosse (16) de l'arme (10) en parallèle avec le canon (28) de l'arme (10), l'ensemble télescopique formant une structure parallèle à l'arme (10) pour amortir l'effet de recul de l'arme.

7. Système d'extension (14) selon la revendication 1, où l'extrémité proximale (24) de l'ensemble télescopique comprend un tube proximal pouvant être accouplé à l'arme (10), au moins un tube d'extension emboîté dans le tube proximal et pouvant tourner librement par rapport à celui-ci, et une pince libérable permettant de fixer sélectivement l'au moins un tube d'extension au tube proximal, l'orientation angulaire relative du tube proximal et du tube d'extension étant réglables en rotation l'une par rapport à l'autre de sorte que l'inclinaison de l'arme et la capacité d'ajustement de la visée de l'arme inclinée sont possibles lorsque l'ensemble est fixé à l'arme, comprenant de préférence en outre un niveau à bulle (24) accouplé de manière ajustable au système d'extension (14) pour fournir une indication de l'alignement azimutal de l'arme (10).

8. Système d'extension (14) selon la revendication 1, comprenant en outre des raccords de fixation pour deux supports d'arme à l'extrémité distale de l'ensemble télescopique (14), l'extrémité distale de l'ensemble télescopique (14) étant sélectivement rotative par rapport au à l'arme (10) pour positionner sélectivement l'un des deux supports d'arme dans une configuration opérationnelle, de préférence lorsque les deux supports d'arme sont fixés sur des côtés opposés de l'extrémité distale de l'ensemble télescopique (14) pour permettre le positionnement de l'un ou l'autre des deux supports d'arme dans une configuration opérationnelle par une rotation d'approximativement 180° de l'extrémité distale de l'ensemble télescopique.

9. Ensemble comprenant un système d'extension (14) selon l'une quelconque des revendications 1 à 8 précédentes et une arme (10) à laquelle le système d'extension est fixé.

10. Ensemble selon la revendication 9, où l'accouplement de l'ensemble à l'arme (10) est **caractérisé par** un degré prédéterminé de flexibilité de sorte que le recul de l'arme (10) et le mouvement résultant de la bouche effective (26) de l'arme (120) lors du tir sont au moins partiellement absorbés par l'ensemble.
